(19)

**Europäisches Patentamt**
**European Patent Office**
**Office européen des brevets**

(11) **EP 4 270 293 A1**

(12) **EUROPEAN PATENT APPLICATION**

(43) Date of publication:
**01.11.2023 Bulletin 2023/44**

(21) Application number: **23170075.8**

(22) Date of filing: **26.04.2023**

(51) International Patent Classification (IPC):
***G06Q 30/06*** *(2023.01)*

(52) Cooperative Patent Classification (CPC):
**G06Q 30/06;** Y02P 90/84

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.04.2022 KR 20220052499**

(71) Applicant: **Favicon Co., Ltd.**
**Seoul 08375 (KR)**

(72) Inventors:
- **Kim, Il-Hwan**
**08375 Seoul (KR)**
- **Moon, Ji-Yong**
**03446 Seoul (KR)**
- **Kim, Jung-In**
**31152 Cheonan-si, Chungcheongnam-do (KR)**

(74) Representative: **BCKIP Part mbB**
**Siegfriedstraße 8**
**80803 München (DE)**

(54) **PERSONAL CARBON EMISSION RIGHT CERTIFICATION TRADE SYSTEM**

(57) Disclosed is a personal carbon emission right certification trade system, comprising: a popular traffic-based carbon emission right calculation part 140 configured to calculate a first carbon emission right to which the first carbon emission reduction amount is applied; an environment-friendly vehicle-based carbon emission right calculation part 150 configured to calculate a second carbon emission right to which the second carbon emission reduction amount is applied; and a carbon emission right trade part 160 configured to transfer the carbon emission rights including the first carbon emission right and the second carbon emission right to a different user in response to a request for transfer of the carbon emission rights.

EP 4 270 293 A1

**Description**

## CROSS-REFERENCE TO RELATED APPLICATION

This application claims priority to Korean Patent Application No. 10-2022-0052499, filed on April 28, 2022, in the Korean Intellectual Property Office, the entire contents of which are hereby incorporated by reference.

## BACKGROUND OF THE INVENTION

Field of the Invention

The present invention relates to a personal carbon emission right certification trade system, and more particularly, to a personal carbon emission right certification trade system capable of calculating a right to emit carbon according to a carbon emission amount concerning a private person, and trading in the carbon emission right with a different private person, a company, and a country.

Description of the Related Arts

Greenhouse gases (GHGs) is a gas that raises the temperature of the atmosphere by adsorbing radiant heat in the series of infrared light occurring from the surface of the earth. Representative examples of the greenhouse gases include carbon dioxide ($CO_2$), methane ($CH_4$), Freon (CFC), nitrous oxide ($N_2O$), vapor ($H_2O$), and so on.

The greenhouse gases may become a main cause which gives rise to global warming by raising the average atmospheric temperature of the earth. Furthermore, due to the global warming, the disorder of an ecological system may occur in such a form that a rise in seawater surface occurs, subtropical food life increases, and regions where mountains and forests are distributed are destroyed.

In order to solve the problems occurring due to the global warming, various countries of the world concluded the United Nations Framework Convention on Climate Change (UNFCCC) concerning a change in climate in 1992. Also, based on the Kyoto Protocol which was adopted in 1997 and came into effect in 2005, the reduction of emission amounts concerning six kinds of greenhouse gases including carbon dioxide was mandatory.

The Kyoto Protocol introduced systems, such as joint implementation JI, a clean development mechanism (CDM), emission trading ET, and so on.

Among them, the emission right trading system is a system that is prescribed so as to transfer an emission right concerning the emission amount of a remaining amount to a different country in case that greenhouse gases are emitted to be less than an amount limited of greenhouse gas emission, and so as to take over an emission right concerning the emission amount of an excess amount from a different country in case that greenhouse gases are emitted to exceed an amount limited of greenhouse gas emission.

The emission right trading system may trade in a right to emit greenhouse gases with a country and another country, and may also trade in a right to emit greenhouse gases with a private person, a company, and a country. In particular, as an obligation to reduce greenhouse gases is systematized all over the world, under circumstances that an interest in a right to emit carbon has become higher, the fact is that the demand of private persons and companies that desire to trade in a right to emit carbon has been increasing gradually.

In order for a private person to trade in a carbon emission right, there is a necessity for exactly calculating an amount of carbon emitted by the private person.

Also, it has been required to have a system capable of trading in the calculated carbon emission right according to the private person with a different private person, a company, and a country.

## SUMMARY OF THE INVENTION

In order to solve the aforesaid problems, an object of the present invention is to provide a system capable of calculating a carbon emission amount according to a private person, calculating a right to emit carbon, and trading in it with a different private person, a company, and a country.

Also, the other object of the present invention is to provide a system capable of calculating a carbon emission amount according to a private person, and a right to emit carbon by utilizing data regarding the use of a popular traffic means, and global position system (GPS) data of a portable electronic device, and calculating and certifying a right to emit carbon shown at the time of using of an environment-friendly vehicle by calculating a distance covered using a driving record of a personal traffic means which is an internal-combustion engine vehicle or an environment-friendly vehicle of a personal user, and information on charging expenses, thereby trading in it with a different private person, a company, and a country.

The personal carbon emission right certification trade system according to one exemplary embodiment of the present invention for solving the aforesaid problems may comprise: a popular traffic-based carbon emission right calculation part 140 configured to calculate a first carbon emission reduction amount concerning a personal user using an amount of carbon emitted at the time when the personal user uses his or her personal traffic means which is an internal-combustion engine vehicle of the persona user, and an amount of carbon emitted at the time when the personal user uses a popular traffic means, and to calculate a first carbon emission right to which the first carbon emission reduction amount is applied; an environment-friendly vehicle-based carbon emission right calculation part 150 configured to calculate a second carbon emission reduction amount concerning the personal user using the amount of carbon emitted at the time when the personal user uses his or her personal traffic means which is the internal-combustion engine vehicle or the environment-friendly vehicle of the personal user, and the amount of carbon emitted at the time when the personal user uses the popular traffic means which is an internal-combustion engine vehicle or an environment-friendly vehicle, and to calculate a second carbon emission right to which the second carbon emission reduction amount is applied; and a carbon emission right trade part 160 configured to transfer the carbon emission rights including the first carbon emission right and the second carbon emission right to a different user in response to a request for transfer of the carbon emission rights.

The present invention can calculate the amount emitted of carbon concerning the personal user using the data regarding use of the popular traffic means, and the GPS data of the portable electronic device of the personal user, can calculate the carbon emission right shown at the time when the personal user uses the popular traffic means by using information thereabout, and can calculate the carbon emission right by calculating and using the amount of carbon emitted at the time when the personal user uses his or her personal traffic means which is the internal-combustion engine vehicle or the environment-friendly vehicle of the personal user, and the amount of carbon emitted at the time when the personal user uses the popular traffic means which is the internal-combustion engine vehicle or the environment-friendly vehicle.

Also, according to the present invention, it is possible to calculate and provide the carbon emission rights more exactly by correcting the carbon emission rights using information on charging expenses of the personal traffic means which is the internal-combustion engine vehicle or the environment-friendly vehicle of the personal user.

Also, according to the present invention, the personal user may trade in the carbon emission rights with a different personal user, a company user, and a national user so that the carbon emission rights can be transferred or acquired by transfer.

## BRIEF DESCRIPTION OF THE DRAWINGS

FIG. 1 is a block diagram concerning a personal carbon emission right certification trade system according to one exemplary embodiment of the present invention.

FIG. 2 is a block diagram concerning a popular traffic-based carbon emission right calculation part of the personal carbon emission right certification trade system according to said one exemplary embodiment of the present invention.

FIG. 3 is a block diagram concerning an environment-friendly vehicle-based carbon emission right calculation part of the personal carbon emission right certification trade system according to said one exemplary embodiment of the present invention.

FIG. 4 is a view illustrating information included in data regarding the use of a popular traffic means according to said one exemplary embodiment of the present invention.

FIG. 5 is a view illustrating information included in GPS data of a portable electronic device according to said one exemplary embodiment of the present invention.

FIG. 6 is a view for explaining a method of calculating a movement distance of a personal user according to said one exemplary embodiment of the present invention.

FIG. 7 is a view for explaining a method of calculating the average number of boarding persons according to said one exemplary embodiment of the present invention.

FIG. 8 and FIG. 9 are views for explaining the calculation of a carbon emission amount concerning the personal user, and correction on a driving distance using the GPS data of the portable electronic device of the personal user, and information about the driving distance included in a driving record of a personal traffic means according to said one exemplary embodiment of the present invention.

FIG. 10 is a flow chart for explaining a method of calculating a right to emit carbon through the personal carbon emission right certification trade system according to said one exemplary embodiment of the present invention.

FIG. 11 is a flow chart for explaining a method of calculating another right to emit carbon through the personal carbon emission right certification trade system according to the other exemplary embodiment of the present invention.

## DETAILED DESCRIPTION OF THE INVENTION

The present invention can be modified variously, and can have various exemplary embodiments, and the specific exemplary embodiments are illustrated in the drawings, and are described in detail in the detailed description. However, they shouldn't be regarded as limiting the present invention to specific embodied forms, but should be understood as including all the modifications, equivalents, or alternations included in the idea and the technical scope of the present invention.

However, in the following description with regard to embodied forms, it is to be noted that, when the detailed description of conventional functions or constitutions related with the present invention may make the gist of the present invention unnecessarily unclear, the detailed description thereof will be omitted. Also, it should be understood that the sizes of the constituent elements shown in the drawings may be exaggeratedly drawn for the description, and do not mean actually applied sizes.

Also, throughout the present specification, when it is described that one constituent element "is connected" or "linked" to another constituent element, although said one constituent element may directly be connected or may directly be linked to said another constituent element, it should be understood that these constituent elements may be connected or linked to each other via the other constituent element therebetween, unless the context clearly indicates otherwise. Also, throughout the present specification, when it is described that a part "comprises" a constituent element, this means that the part may further comprise the other constituent elements rather than excluding the other constituent elements, unless the context clearly indicates otherwise.

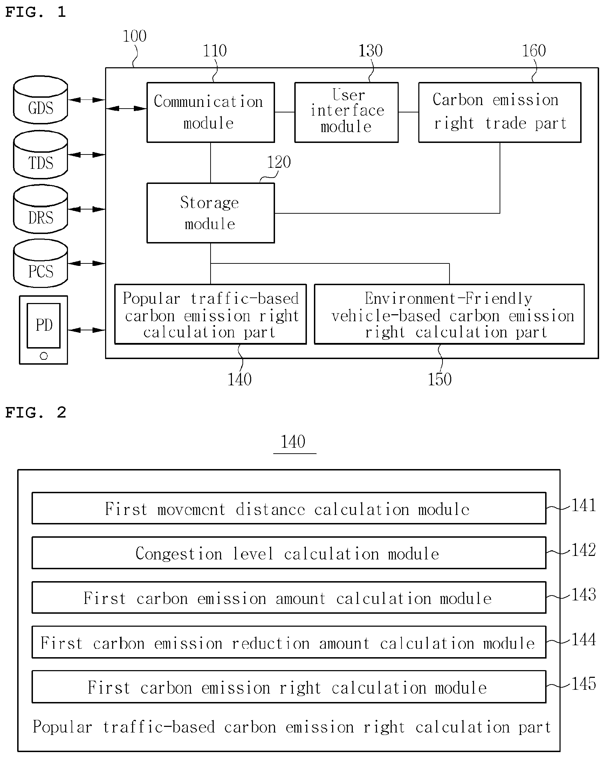

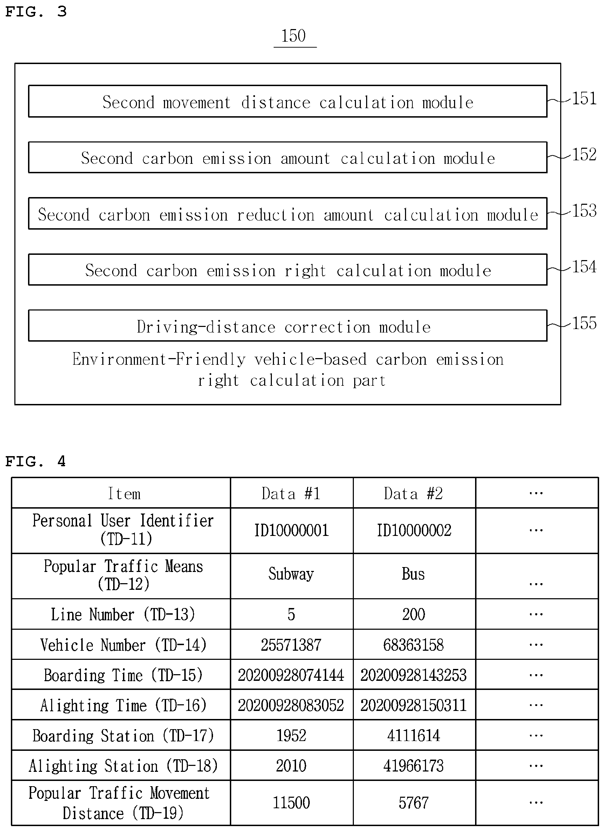

FIG. 1 is a block diagram concerning a personal carbon emission right certification trade system according to one exemplary embodiment of the present invention, FIG. 2 is a block diagram concerning a popular traffic-based carbon emission right calculation part of the personal carbon emission right certification trade system according to said one exemplary embodiment of the present invention, and FIG. 3 is a block diagram concerning an environment-friendly vehicle-based carbon emission right calculation part of the personal carbon emission right certification trade system according to said one exemplary embodiment of the present invention.

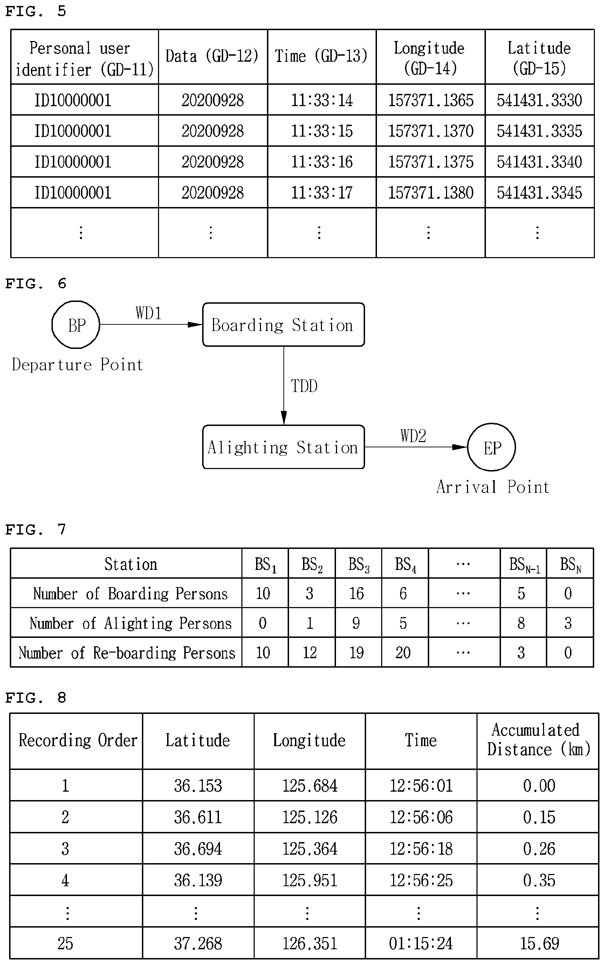

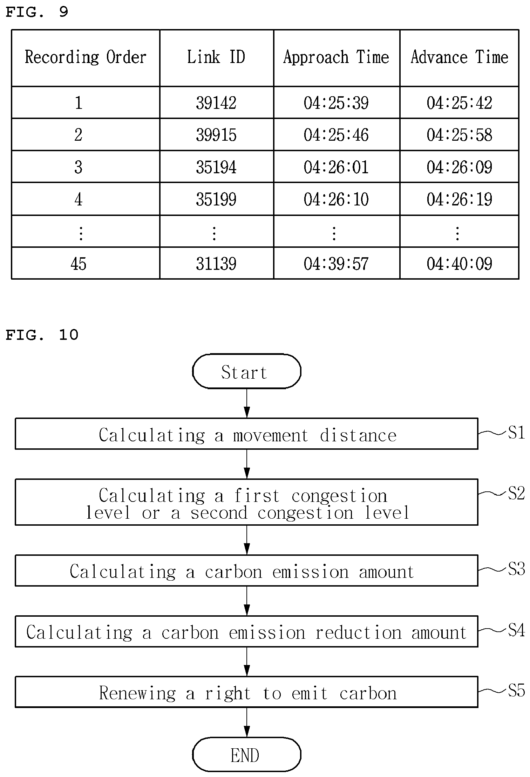

Also, FIG. 4 is a view illustrating information included in data regarding the use of popular traffic according to said one exemplary embodiment of the present invention, FIG. 5 is a view illustrating information included in global position system (GPS) data of a portable electronic device according to said one exemplary embodiment of the present invention, FIG. 6 is a view for explaining a method of calculating a movement distance rendered by a personal user according to said one exemplary embodiment of the present invention, FIG. 7 is a view for explaining a method of calculating the average number of boarding persons according to said one exemplary embodiment of the present invention, and FIG. 8 and FIG. 9 are views for explaining the calculation of a carbon emission amount concerning the personal user, and correction on a driving distance using the GPS data of the portable electronic device of the personal user, and information about the driving distance included in a driving record of a personal traffic means according to said one exemplary embodiment of the present invention.

The personal carbon emission right certification trade system 100 according to one exemplary embodiment of the present invention comprises: a communication module 110; a storage module 120; a user interface module 130; a popular traffic-based carbon emission right calculation part 140; an environment-friendly vehicle-based carbon emission right calculation part 150; and a carbon emission right trade part 160.

A private person, a company, and a country that use the personal carbon emission right certification trade system 100 according to said one exemplary embodiment of the present invention are defined as a personal user PU, a company user CU, and a national user NU, respectively.

The data regarding the use of popular traffic TD used by the personal carbon emission right certification trade system 100 according to said one exemplary embodiment of the present invention may comprise the details of use of a traffic card rendered by the personal user PU.

The traffic card may be a prepaid traffic card, like a T-money card, a Cashbee card, a Mybee card, a HANARO card, one pass card, a top pass card, a Han pay card, a rail plus card, and so on, or a deferred-payment traffic card, like a credit card, a check card, and so on. Also, without being limited thereto, it may be a card for electronically paying and settling a traffic rate, or the other media, different kinds of media capable of recording the details of use of a traffic means.

As illustrated in FIG. 4, the popular traffic use-based data TD may comprise: information on an identifier TD-11 which sorts the personal user PU; information on a popular traffic means TD-12 which represents a popular traffic system, such as a bus, a subway, and so on, used by the personal user PU; information on a line number TD-13 used by the personal user PU; information on a vehicle number TD-14 used by the personal user PU; information on boarding time TD-15 rendered by the personal user PU; information on alighting time TD-16 rendered by the personal user PU; information on a boarding station TD-17 rendered by the personal user PU; information on an alighting station TD-18 rendered by the personal user PU; and information on a popular traffic means-based movement distance TD-19 which is a distance between the boarding station TD-17 and the alighting station TD-18.

The personal carbon emission right certification trade system 100 according to said one exemplary embodiment of the present invention may receive the popular traffic use-based data TD from a popular traffic use-based data server TDS managed by an administrator of popular traffic.

The global position system (GPS) data GD of the portable electronic device used by the personal carbon emission right certification trade system 100 according to said one exemplary embodiment of the present invention may comprise the details of a movement of the portable electronic device rendered by the personal user PU.

The portable electronic device may be any one among a smart phone, a tablet personal computer (PC), a laptop PC, and a personal digital assistant (PDA) including a GPS instrument. Without being limited thereto, the portable electronic device may comprise the GPS instrument, and if equipment is equipment which the personal user PU can carry, it may correspond to the portable electronic device.

As illustrated in FIG. 5, the GPS data GD of the portable electronic device may comprise: information on an identifier GD-11 which sorts the personal user PU; information on a date GD-12 and time GD-13 when the portable electronic device transmits a satellite signal; information on a longitudinal position GD-14 of the portable electronic device; and information on a latitudinal position GD-15 of the portable electronic device.

The personal carbon emission right certification trade system 100 according to said one exemplary embodiment of the present invention may receive the GPS data GD of the portable electronic device directly from the portable electronic device of the personal user PU.

Also, the personal carbon emission right certification trade system 100 according to said one exemplary embodiment of the present invention may receive the GPS data GD of the portable electronic device from a GPS data server (GDS) managed by an enterpriser in electric communications.

The communication module 110 may receive the data TD regarding the use of popular traffic and the GPS data GD of the portable electronic device from the outside of the personal carbon emission right certification trade system 100 according to said one exemplary embodiment of the present invention.

The communication module 110 may receive the popular traffic use-based data TD and the GPS data GD of the portable electronic device using a protocol, like a transmission control protocol/internet protocol (TCP/IP), a server message block

(SMB), a common internet file system (CIFS), a network file system (NFS), and so on, from the personal carbon emission right certification trade system 100 according to said one exemplary embodiment of the present invention, and the other computing devices connected to a personal area network, (PAN), a local area network, (LAN), a metropolitan area network (MAN), and a wide area network (WAN). Without being limited thereto, the communication module 110 may also receive the popular traffic use-based data TD and the GPS data GD of the portable electronic device using the other communication protocols.

The communication module 110 may receive the popular traffic use-based data TD and the GPS data GD of the portable electronic device from peripherals connected to a data input and output terminal or a computer bus, like a serial port, a parallel port, a small computer system interface (SCSI), a universal serial bus (USB), Institute of Electrical and Electronics Engineers (IEEE) 1394, an advanced technology attachment (ATA), a serial advanced technology attachment (SATA), Motherboard M.2, a peripheral component interconnect (PCI) bus, and a PCI-Express. Without being limited thereto, the communication module 110 may receive the popular traffic use-based data TD and the GPS data GD of the portable electronic device from peripherals connected to the other data input and output terminals.

The storage module 120 may store data generated by modules which the personal carbon emission right certification trade system 100 according to said one exemplary embodiment of the present invention comprises, or the received data.

Also, among the modules which the personal carbon emission right certification trade system 100 according to said one exemplary embodiment of the present invention comprises, the remaining modules except the storage module 120 may load and use the data stored by the storage module 120.

The storage module 120 may comprise a memory device in order to store the data. The memory device may be a non-volatile memory device, like a hard disk drive, an optical disc drive, a magnetic tape, a floppy disk, a flash memory, a solid state drive (SSD), and so on, or a volatile memory device, like a random-access memory (RAM), and so on. Without being limited thereto, the memory device may be the other kinds of memory devices.

The popular traffic-based carbon emission right calculation part 140 calculates a first carbon emission reduction amount concerning the personal user using the amounts of carbon emitted at the time of using of the personal traffic means which is the internal-combustion engine vehicle of the personal user, and at the time of using of the popular traffic means, and calculates a first carbon emission right.

More specifically, the popular traffic-based carbon emission right calculation part 140 may comprise: a first movement distance calculation module 141; a congestion level calculation module 142; a first carbon emission amount calculation module 143; a first carbon emission reduction amount calculation module 144; and a first carbon emission right calculation module 145.

The first movement distance calculation module 141 may calculate a movement distance of the personal user PU.

The first movement distance calculation module 141 may obtain information on a distance used by popular traffic TDD concerning the personal user PU using information on the popular traffic means-based movement distance TD-19, and so on included in the popular traffic use-based data TD.

The first movement distance calculation module 141 may calculate a first walking distance WD1 which is a distance between the departure point BP and the boarding station TD-17 by adding up movement distances shown between each of adjacent times based on all the GPS data GD of the portable electronic device shown between the time when the personal user PU locates at the departure point BP, and the time when the personal user locates at the boarding station TD-17. Also, the first movement distance calculation module 141 may calculate a first period of walking time WT1 which is time between the time when the personal user PU locates at the departure point BP, and the time when the personal user locates at the boarding station TD-17.

The first movement distance calculation module 141 may calculate a second walking distance WD2 which is a distance between the alighting station TD-18 and the arrival point EP by adding up movement distances shown between each of adjacent times based on all the GPS data GD of the portable electronic device shown between the time when the personal user locates at the alighting station TD-18, and the time when the personal user PU locates at the arrival point EP. Also, the first movement distance calculation module 141 may calculate a second period of walking time WT2 which is time between the time when the personal user PU locates at the alighting station TD-18, and the time when the personal user locates at the arrival point EP.

The first movement distance calculation module 141 may calculate a movement distance OD between the departure point BP and the arrival point EP by adding up the distance used by popular traffic TDD, the first walking distance WD1 and the second walking distance WD2 concerning the personal user PU.

The congestion level calculation module 142 may calculate a level of popular traffic congestion.

The boarding station TD-17 concerning the personal user PU is defined as a first station BS1, and the alighting station TD-18 is defined as an nth station BSN.

The congestion level calculation module 142 may calculate average travel time ATT between each of specific stations based on all the popular traffic use-based data TD. That is, the congestion level calculation module 142 may calculate travel time by obtaining information on the boarding time TD-15 and the alighting time TD-16 from all the popular traffic use-based data TD which shows that the boarding station TD-17 is the first station BS1, and the alighting station TD-18 is the nth station BSN, and may calculate the average travel time ATT by the arithmetical mean of the calculated travel time.

After obtaining information on the boarding time TD-15 shown at the boarding station TD-17, and the alighting time TD-16 shown at the alighting station TD-18 from the popular traffic use-based data TD concerning the personal user PU, the congestion calculation module 142 may calculate personal travel time PTT.

The congestion level calculation module 142 may calculate a first congestion level CV1 by subtracting the average travel time ATT from the personal travel time PTT.

In other words, the congestion level calculation module 142 may calculate a second congestion level CV2 by dividing the popular traffic movement distance TD-19, which is the distance between the boarding station TD-17 and the alighting station TD-18, by the personal travel time PTT on the basis of the popular traffic use-based data TD concerning the personal user PU.

The first carbon emission amount calculation module 143 may calculate the amounts of carbon emitted at the time when the personal user PU uses each of his or her personal traffic means and the popular traffic means.

The first carbon emission amount calculation module 143 may calculate the amount of carbon emitted ECEV at the time when the personal user PU uses his or her personal traffic means according to Mathematical Formula 1 below:

[Mathematical Formula 1]

$$ECEV = ((CV \times EM \times EC \times V1) + (CV \times AFU1 \times CTOE \times CCE \times 44/12 \times V2)$$

(where, ECEV represents a carbon emission amount shown at the time when the personal user uses his or her personal vehicle, CV represents a level of congestion, EM represents the unit (CO2/kwh) of a greenhouse gas emission source, EC represents an amount (kwh) charged of electricity, Vi represents the kind of an environment-friendly vehicle(V1 represents 1, and V2 represents 0 in the case of an electric car or a hydric car, V1 represents 1, and V2 represents 1 in the case of a hybrid vehicle, and V1 represents O, and V2 represents 1 V1 in the case of an internal-combustion engine vehicle), AFU1 represents an amount used of fuel shown at the time when the personal user uses his or her personal vehicle, CTOE represents an oil conversion factor for calculating an oil conversion amount based on the amount used of fuel shown at the time when the personal user uses his or her personal vehicle, and CCE represents a carbon emission factor to calculate a carbon emission amount based on the oil conversion amount shown at the time when the personal user uses his or her personal vehicle).

In said Mathematical Formula 1, the variable, CV may be the first congestion level CV1 or the second congestion level CV2.

The variable, AFU1 may be the amount used of fuel concerning the personal traffic means used by the personal user PU. The first carbon emission amount calculation module 143 may calculate a value of AUF1 by multiplying fuel efficiency FE1 of the personal traffic means by the movement distance OD between the departure point BP and the arrival point EP

The variable, CTOE may be the oil conversion factor to calculate the oil conversion amount based on the amount used of fuel concerning the personal traffic means.

The variable, CCE may be the carbon emission factor to calculate the carbon emission amount based on the oil conversion amount concerning the personal traffic means.

The storage module 120 may previously store the fuel efficiency FE1 according to the personal traffic means, the oil conversion factor CTOE, and the carbon emission factor CCE, and the first carbon emission amount calculation module 143 may load and use them.

The first carbon emission amount calculation module 143 may calculate the carbon emission amount TCEV shown at the time when the personal user PU uses the popular traffic means according to Mathematical Formula 2 below:

[Mathematical Formula 2]

$$EPCEV = ((CV \times EM \times EC \times V1) + (CV \times AFU2 \times CTOE \times CCE \times 44/12 \times V2)) \times 1/NP$$

(EPCEV represents a carbon emission amount shown at the time when the personal user uses the popular traffic means, CV represents a level of congestion, EM represents the unit ($CO_2$/kwh) of a greenhouse gas emission source, EC represents an amount charged (kwh) of electricity, Vi represents the kind of an environment-friendly vehicle(V1 represents 1, and V2 represents 0 in the case of an electric car or a hydric car, V1 represents 1, and V2 represents 1 in the case of a hybrid vehicle, and V1 represents O, and V2 represents 1 in the case of an internal-combustion vehicle) AUF2 represents an amount used of fuel shown at the time when the personal user uses the popular traffic means, CTOE represents an oil conversion factor to calculate an oil conversion amount based on the amount used of fuel shown at the time of using of the popular traffic means, CCE represents a carbon emission factor to calculate the carbon emission amount based on the oil conversion amount shown at the time of using of the popular traffic means, and NP represents the average number of re-boarding persons which is an average value of the number of boarding persons concerning the popular traffic means).

The first carbon emission amount calculation module 143 may add up the amounts of carbon emitted according to each popular traffic route shown at the time when the personal user PU uses a large number of popular traffic routes, or changes a bus or subway line according to Mathematical Formula 2.

In said Mathematical Formula 2, the variable, CV may be the first congestion level CV1, or the second congestion level CV2.

The variable, AFU2 may be the amount used of fuel concerning the popular traffic means which the personal user PU uses. The first carbon emission amount calculation module 143 may calculate a value of AFU2 by multiplying fuel efficiency FE 2 of the popular traffic means by the distance used by popular traffic TDD.

The variable, CTOE may be the oil conversion factor to calculate the oil conversion amount based on the amount used of fuel concerning the popular traffic means.

The variable, CCE may be the carbon emission factor to calculate the carbon emission amount on the basis of the oil conversion amount concerning the popular traffic means.

The variable, NP may be the average number of re-boarding persons which is the average value of the real number of boarding persons according to each station section located between the boarding station TD-17 and the alighting station TD-18 used by the personal user PU derived from the popular traffic use-based data TD.

As illustrated in FIG. 7, after obtaining information on the number of boarding persons and the number of alighting persons shown at all the stations BS2 to BSN-1 located between the boarding station TD-17 and the alighting station TD-18 used by the personal user PU, the first carbon emission right calculation module 160 may calculate the number of re-boarding persons shown at the current stations BS2 to BSN by adding the current number of boarding persons shown at the current stations BS2 to BSN to the number of re-boarding persons shown at the previous stations BS1 to BSN-1 according to each station BS2 to BSN, and subtracting the number of alighting persons therefrom.

The storage module 120 may previously store information on the fuel efficiency FE according to the popular traffic means, the oil conversion factor CTOE, and the carbon emission factor CCE, and the first carbon emission amount calculation module 143 may load and use the information thereabout.

The first carbon emission reduction amount calculation module 144 may calculate a difference ECEV-EPCEV between the carbon emission amounts, which are shown in each case that the personal user PU uses his or her personal traffic means and the popular traffic means, in a carbon emission reduction amount.

The first carbon emission right calculation module 145 may calculate a right to emit carbon CER by reflecting the carbon emission reduction amount ECEV-EPCEV in the carbon emission right CER.

The first carbon emission right calculation module 145 may calculate a walking constant σ according to Mathematical Formula 3 below, and the walking constant σ may be the total walking distance WD compared with the total movement distance OD.

$$[\text{Mathematical Formula 3}]$$

$$\sigma = 1 + \frac{WD1 + WD2}{WD1 + WD2 + TDD}$$

In said Mathematical Formula 3, σ may be a walking constant, WD1 may represent the first walking distance WD1, WD2 may be the second walking distance WD2, and TDD may be the distance used by popular traffic TDD concerning the personal user PU.

The first carbon emission right calculation module 145 may calculate the carbon emission right CER owned by the personal user PU according to Mathematical Formula 4 below:

$$[\text{Mathematical Formula 4}]$$
$$CER = (ECEV - EPCEV) \times \sigma$$

(CER represents a carbon emission right of the personal user, ECEV represents a carbon emission amount shown at the time when the personal user uses his or her personal traffic means, EPCEV represents a carbon emission amount shown at the time when the personal user uses the popular traffic means, and σ represents a walking constant).

The variable, ECEV may be the carbon emission amount calculated by the first carbon emission amount calculation module 143, and shown at the time when the personal user PU uses his or her personal traffic means.

The variable, EPCEV may be the carbon emission amount calculated by the first carbon emission amount calculation module 143, and shown at the time when the personal user PU uses the popular traffic means.

The first carbon emission right calculation module 145 may calculate the carbon emission right CER owned by the personal user PU based on the value calculated according to said Mathematical Formula 4.

The first carbon emission right calculation module 145 may pay for the carbon emission right of the personal user PU in the form of mileage, points, block chain coins, and so on, thereby causing trade to be realized with a different user in the future.

The environment-friendly vehicle-based carbon emission right calculation part 150 calculates a second carbon emission reduction amount concerning the personal user using the amount of carbon emitted at the time when the personal user uses his or her personal traffic means which is the internal-combustion engine vehicle or the environment-friendly vehicle, and the amount of carbon emitted at the time of using of the popular traffic means which is the internal-combustion engine vehicle or the environment-friendly vehicle, and calculates a second carbon emission right to which the second carbon emission reduction amount is applied.

More specifically, the environment-friendly vehicle-based carbon emission right calculation part 150 may comprise: a second movement distance calculation module 151; a second carbon emission amount calculation module 152; a second carbon emission amount reduction amount calculation module 153; a second carbon emission right calculation module 154; and a driving-distance correction module 156.

The second movement distance calculation module 152 calculates the first walking distance which is the distance between the departure point and the boarding station, and the second walking distance which is the distance between the alighting station and the arrival point, and calculates the first period of walking time which is time between the time when the personal user locates at the departure point and the time when the personal user locates at the boarding station, and the second period of walking time which is time between the time when the personal user locates at the alighting station and the time when the personal user locates at the arrival point, and the second movement distance calculation module also obtains the information on the distance used by popular traffic means which is the internal-combustion engine vehicle or the environment-friendly vehicle, and calculates the driving distance of the personal traffic means using the driving record including information on a distance covered by the personal traffic means which is the internal-combustion engine vehicle or the environment-friendly vehicleof the personal user.

Also, the second carbon emission amount calculation module 152 calculates the amount of carbon emitted at the time of using of the environment-friendly vehicle, and the amount of carbon emitted at the time when the personal user uses the popular traffic means which is the internal-combustion engine vehicle or the environment-friendly vehicle using the driving record of the personal traffic means which is the internal-combustion engine vehicle or the environment-friendly vehicle of the personal user, and information on charging expenses,

At this time, the second carbon emission amount calculation module 152 may calculate the carbon emission amount shown at the time when the personal user uses his or her personal traffic means which is the internal-combustion engine vehicle or the environment-friendly vehicle based on said Mathematical Formula 1.

Also, the second carbon emission amount calculation module 152 may calculate the carbon emission amount shown at the time when the personal user uses the popular traffic means which is the internal-combustion engine vehicle or the environment-friendly vehicle based on said Mathematical Formula 2.

Also, unlike this, the second carbon emission amount calculation module 152 may be configured to calculate the carbon emission amount concerning the personal user using the GPS data of the portable electronic device of the personal user, and the information on the driving distance included in the driving record of the personal traffic means, or may be configured to correct the driving distance.

That is, the second carbon emission amount calculation module 152 may obtain the information on the distance covered from a difference between a first distance in the light of recording order of the GPS data, and a lastly accumulated distance in the light of recording order using information on accumulated distances of GPS equipment as shown in FIG. 8.

Also, as shown in FIG. 9, data concerning a link through which a vehicle passes, approach time of the link, and time advancing to the link are recorded in navigation. Accordingly, the second carbon emission amount calculation module 152 may obtain the information on the driving distance by accumulating and adding up distances of the link through which the vehicle passes.

Meanwhile, the second carbon emission amount reduction amount calculation module 153 may calculate the second carbon emission reduction amount concerning the personal user using the amount of carbon emitted at the time when the personal user uses his or her personal traffic means which is the internal-combustion engine vehicle or the environment-friendly vehicle, and the amount of carbon emitted at the time when the personal user uses the popular traffic means which is the internal-combustion engine vehicle or the environment-friendly vehicle.

Also, the second carbon emission right calculation module 154 calculates the carbon emission right using a value resulting from multiplying the carbon emission reduction amount concerning the personal user by the walking constant.

That is, the second carbon emission right calculation module 154 may calculate the walking constant based on said Mathematical Formula 3, and may also calculate the carbon emission right of the personal user based on said Mathematical Formula 4.

Moreover, the second carbon emission right calculation module 154 may pay for the carbon emission right of the personal user in the form of mileage, points, block chain coins, and so on, thereby causing trade to be realized with a different user in the future.

Also, the driving-distance correction module 155 may receive the information on the charging expenses paid by a payment card for the settlement of charging concerning the personal traffic means which is the internal-combustion engine vehicle or the environment-friendly vehicle of the personal user from a payment card server (PCS), and may correct the second carbon emission right by calculating the carbon emission amount, and the carbon emission reduction amount using the information on the charging expenses accumulated monthly or yearly with respect to the information on the charging expenses.

Thus, the environment-friendly vehicle-based carbon emission right calculation part 150 may calculate and verify the second carbon emission reduction amount concerning the personal user using the information on the driving distance included in the driving record of the personal traffic means, and the GPS data of the portable electronic device of the personal user, and may correct the second carbon emission reduction amount using the information on the charging expenses settled by the payment card concerning the personal traffic means which is which is the internal-combustion engine vehicle or the environment-friendly vehicle of the personal user.

For example, according to the present invention, a driving record server (DRS) may receive and store general data, like the driving record, and so on, through an electronic device installed internally in the personal traffic means which is the internal-combustion engine vehicle or the environment-friendly vehicle, and may provide the environment-friendly vehicle-based carbon emission right calculation part 150 with the stored data, or may calculate the distance covered on the basis of the data.

In addition, according to the present invention, in order to prevent the driving record of navigation installed in the personal traffic means from being counterfeited and being forged, and to heighten reliability, the environment-friendly vehicle-based carbon emission right calculation part 150 may calculate and verify the second carbon emission reduction amount concerning the personal user using the GPS data GD provided from terminal equipment PD of the personal user PU, or the GPS data server GDS.

Also, according to the present invention, a movement distance may be measured in such a manner as to trace charging expenses through a card for the settlement of electric charge/hydric charge only. That is, when a card company issues a payment (credit/check) card for the service of electric charge, and expenses for the electric charge are paid by the corresponding card, the charging expenses are monthly and yearly accumulated in the payment card server (PCS), and the accumulated expenses for the electric charge is counted backward, thereby being converted into the distance covered, so it is possible for the driving-distance correction module 155 to correct the second carbon emission right by correcting the second carbon emission reduction amount.

Also, as previously stated, the communication module 110 may receive the popular traffic use-based data, the GPS data of the portable electronic device, and the request for the transfer of the carbon emission right, may also receive the information on the charging expenses paid by the payment card from the payment card server PCS, and may receive the driving record including the information on the distance covered by the personal traffic means which is the internal-combustion engine vehicle or the environment-friendly vehicle of the personal user from the driving record server DRS of the personal traffic means.

Also, as previously stated, the storage module may store the popular traffic use-based data concerning the personal user, the GPS data of the portable electronic device concerning the personal user, and the information on the first carbon emission reduction amount, and the information on the first carbon emission right concerning the personal user, and may also store the information on the charging expenses paid by the payment card provided from the payment card server PCS, the driving record including the information on the distance covered by the personal traffic means which is the internal-combustion engine vehicle or the environment-friendly vehicle of the personal user, information on the second carbon emission reduction amount concerning the personal user, information on the driving distance included in the driving record of the personal traffic means, and the information on verifying and correcting the distance covered by the personal traffic means.

The user interface module 130 may deal with a request for the provision of information, or a request for trade provided from the personal user PU.

The personal user PU may transmit the request for the provision of information RI or the request for trade RS to the user interface module 130 using the terminal equipment PD, such as a smart phone, a tablet personal computer (PC), a laptop PC, a desktop PC, and so on.

The user interface module 130 may receive a request for provision of the popular traffic use-based data TD from the terminal equipment PD of the personal user PU through the communication module, and then the storage module may load the popular traffic use-based data TD, and may transmit the data to the terminal equipment PD of the personal user PU through the communication module 110.

The user interface module 130 may receive a request for provision of the GPS data GD of the portable electronic device from the terminal equipment PD of the personal user PU through the communication module 110, and the storage module 120 may then load the GPS data GD of the portable electronic device, and may transmit the data to the terminal equipment PD of the personal user PU through the communication module 110.

The user interface module 130 may receive a request for the provision of information on the carbon emission amounts PCEV and TCEV concerning the personal user PU from the terminal equipment PD of the personal user PU through the communication module 110, and then the storage module 120 may load the carbon emission amount PCEV shown at the time when the personal user PU uses his or her personal traffic means, or the carbon emission amount TCEV shown at the time when the personal user PU uses the popular traffic means, and may transmit information thereabout to the terminal equipment PD of the personal user PU through the communication module 110.

The user interface module 130 may receive a request for provision of the information on the carbon emission right CER owned by the personal user PU from the terminal equipment PD of the personal user PU through the communication module 110, and then the storage module may load the carbon emission right CER owned by the personal user PU, and may transmit the information thereabout to the terminal equipment PD of the personal user PU through the communication module 110.

The user interface module 130 may receive a request for transfer SR of the carbon emission right (CER) to a different personal user PU, a company user CU, and a national user NU from the terminal equipment PD of the personal user PU through the communication module 110. In other words, the user interface module 130 may receive a request for transfer of the carbon emission right CER from a company user CU and a national user to the personal user PU, a different company user CU, and a different national user NU through the communication module 110.

The user interface module 130 may transmit the request for the transfer of the carbon emission right CER, which is received, to the carbon emission right trade part 160. The user interface module 130 may receive a result of trade RT concerning the carbon emission right CER handled by the carbon emission right trade part 160, and may then transmit the result to the terminal equipment PD of the personal user PU through the communication module 110.

That is, according to the request for the provision of information provided from the terminal equipment PD of the personal user, the user interface module 130 may cause the storage module 120 to load the popular traffic use-data concerning the personal user, the GPS data of the portable electronic device concerning the personal user, the first carbon emission reduction amount concerning the personal user, and the first carbon emission right owned by the personal user, and may transmit them to the terminal equipment PD of the personal user through the communication module 110.

In addition, the user interface module 130 may cause the storage module 120 to load the information on the charging expenses paid by the payment card provided from the payment card server, the driving record including the information on the distance covered by the personal traffic means which is the internal-combustion engine vehicle or the environment-friendly vehicle of the personal user, information on the second carbon emission reduction amount concerning the personal user, information on the driving distance included in the driving record of the personal traffic means, and the information on verifying and correcting the distance covered by the personal traffic means which is calculated, and may transmit them to the terminal equipment PD of the personal user through the communication module 110.

Meanwhile, the carbon emission right trade part 160 may transfer the carbon emission rights including the first carbon emission right calculated by the popular traffic-based carbon emission right calculation part 140, and the second carbon emission right calculated by the environment-friendly vehicle-based carbon emission right calculation part 150 to a different user.

The carbon emission right trade part 160 may trade in the carbon emission rights CERs with the personal user PU, the company user CU, and the national user NU.

Accordingly, according to the request for the transfer of the carbon emission rights CERs from the user interface module 130, the carbon emission right trade part 160 may transfer the carbon emission rights CERs in quantity designated by the personal user PU, the company user CU, and the national user NU to the other users, like a different personal user PU, a different company user CU, a different national user NU, and so on.

Also, the carbon emission right trade part 160 may transmit the result of trade RT concerning transfer of the carbon emission rights CERs or acquisition of the carbon emission right CER by transfer to the storage module 120 and the user interface module 130.

Accordingly, the storage module 120 may reflect the details of a change in the carbon emission rights CERs concerning a user who transfers the carbon emission rights CERs, and a user who takes over the carbon emission right.

Meanwhile, the storage module 120 may store the popular traffic use-based data concerning the personal user, the GPS data of the portable electronic device concerning the personal user, and the information on the first carbon emission reduction amount concerning the personal user, and the first carbon emission right owned by the personal user, and may store the driving record including the information on the distance covered by the personal traffic means which is the internal-combustion engine vehicle or the environment-friendly vehicle of the personal user, the information on the distance covered by the personal traffic means, the information on the second carbon emission reduction amount rendered by the personal user, and the information on verifying and correcting the driving distance included in the driving record of the personal traffic means.

FIG. 10 is a flow chart for explaining a method of calculating a carbon emission right through the personal carbon emission right certification trade system according to said one exemplary embodiment of the present invention

The method (S1 to S5) of calculating the carbon emission right through the personal carbon emission right certification trade system 100 according to said one exemplary embodiment of the present invention may be a method of calculating a carbon emission right CER occurring at the time when the personal user PU uses popular traffic, and may comprise a first step to a fifth step S1 to S5.

The first step S1 is a step in which the first movement distance calculation module 141 calculates a movement distance rendered by the personal user PU.

The first movement distance calculation module 141 may obtain the information on the distance used by popular traffic TDD concerning the personal user PU using information on the popular traffic movement distance TD-19 and so on included in the popular traffic use-based data TD.

The first movement distance calculation module 141 may calculate the first walking distance WD1 which is the distance between the departure point BP and the boarding station TD-17 by adding up the movement distances shown between each of adjacent times based on all the GPS data of the portable electronic device shown between the time when the personal user locates at the departure point BP, and the time when the personal user locates at the boarding station TD-17. Also, the first movement distance calculation module 141 may calculate the first period of walking time WT1 which is time between the time when the personal user PU locates at the departure point BP, and the time when the personal user locates at the boarding station TD-17.

The first movement distance calculation module 141 may calculate the second walking distance WD2 which is the distance between the alighting station TD-18 and the arrival point EP by adding up the movement distances shown between each of the adjacent times based on all the GPS data GD of the portable electronic device shown between the time when the personal user PU locates at the alighting station TD-18, and the time when the personal user locates at the arrival point EP. Also, the first movement distance calculate module 141 may calculate the second period of walking time WT2 which is time between the time when the personal user PU locates at the alighting station TD-18, and the time when the persona user locates at the arrival point EP.

The second step S2 is a step in which the congestion level calculation module 142 calculates the first congestion level CV1 or the second congestion level CV2.

The congestion level calculation module 142 may calculate the travel time by obtaining information on the boarding time TD-15 and the alighting time TD-16 from all the popular traffic use-based data TD which shows that the boarding station TD-17 is the first station BS1, and the alighting station TD-18 is the Nth station BSN, and may calculate the average travel time ATT by the arithmetical mean of the travel time calculated.

The congestion level calculation module 142 may calculate the personal travel time PTT by obtaining information on the boarding time TD-15 shown at the boarding station TD-17, and the alighting time TD-16 shown at the alighting station TD-18 from the popular traffic use-based data TD concerning the personal user PU.

The congestion level calculation module 142 may calculate the first congestion level CV1 by subtracting the average travel time ATT from the personal travel time PTT.

Also, Based on the popular traffic use-based data TD concerning the personal user PU, the congestion level calculation module 142 may calculate the second congestion level CV2 by dividing the popular traffic movement distance TD-19, which is the distance between the boarding station TD-17 and the alighting station TD-18, by the personal travel time PTT.

The third step S3 is a step of calculating the amounts of carbon emitted at the time when the personal user PU uses each of his or her personal traffic means and the popular traffic means.

The first carbon emission amount calculation module 143 may calculate the carbon emission amount PCEV shown at the time when the personal user PU uses his or her personal traffic means by inputting the first congestion level CV1, or the second congestion level CV2, the amount used of fuel AFU1 concerning the personal traffic means, the oil conversion factor CTOE, the carbon emission factor CCE in Mathematical Formula 1.

The first carbon emission amount calculation module 143 may calculate the carbon emission amount TCEV shown at the time when the personal user PU uses the popular traffic means by inputting the first congestion level CV1 or the second congestion level CV2, the amount used of fuel AFU2 concerning the popular traffic means, the oil conversion factor CTOE, the carbon emission factor CCE, and the average number of re-boarding persons NP in Mathematical Formula 2.

The fourth step S4 is a step in which the first carbon emission reduction amount calculation module 144 calculates the carbon emission reduction amount PCEV-TCEV concerning the personal user PU.

The first carbon emission reduction amount calculation module 144 may calculate the carbon emission reduction amount PCEV-TCEV based on the difference between the carbon emission amount PCEV shown at the time when the personal user PU uses his or her personal traffic means, and the carbon emission amount TCEV shown at the time when the personal user uses the popular traffic means.

The fifth step S5 is a step in which the first carbon emission right calculation module 145 calculates the carbon emission right CER owned by the personal user PU.

The first carbon emission right calculation module 145 may calculate the walking constant σ according to Mathematical Formula 3, and may then calculate the carbon emission right CER owned by the personal user PU by multiplying the carbon emission reduction amount PCEV-TCEV by the walking constant σ according to Mathematical Formula 4.

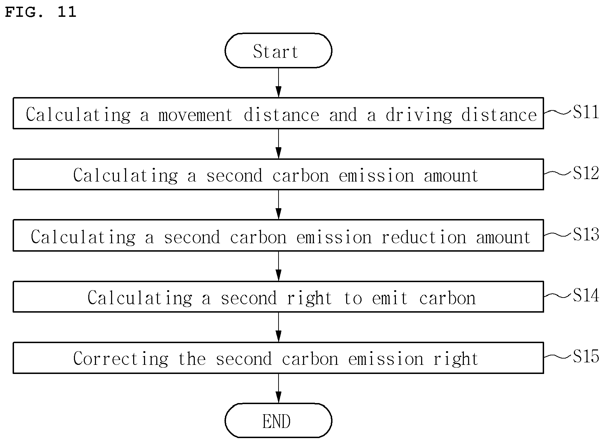

FIG. 11 is a flow chart for explaining a method of calculating a right to emit carbon through the personal carbon emission right trade system according to the other exemplary embodiment of the present invention.

The method (S11-S15) of calculating the carbon emission right through the personal carbon emission right trade system according to the other exemplary embodiment of the present invention may be a method of calculating the carbon emission right occurring at the time when the personal user uses the environment-friendly vehicle, and may comprise an eleventh step to a fifteenth step S11 to S15.

With respect to the eleventh step S11, the second movement distance calculation module 151 may calculate the first walking distance which is the distance between the departure point and the boarding station, and the second walking distance which is the distance between the alighting station and the arrival point with respect to the personal user, and may calculate the first period of walking time which is time between the time when the personal user locates at the departure point, and the time when the personal user locates at the boarding station, and the second period of walking time which is time between the time when the personal user locates at the alighting station, and the time when the personal user locates at the arrival point, and the second movement distance calculation module may obtain the distance used by the popular traffic means which is the internal-combustion engine vehicle or the environment-friendly vehicle, and may calculate the distance covered by the personal traffic means using the driving record including the information on the distance covered by the personal traffic means which is the internal-combustion engine vehicle or the environment-friendly vehicle of the personal user.

For example, according to the present invention, the driving record server DRS may receive and store general data, such as the driving record and so on, from the electronic device installed internally in the personal traffic means, or may provide the general data, such as the driving record, and so on, received from the electronic device installed internally in the personal traffic means, and may calculate the distance covered on the basis of the data.

Accordingly, with respect to the twelfth step S12, the second carbon emission amount calculation module 152 may calculate the amount of carbon emitted at the time of using the environment-friendly vehicle, and the amount of carbon emitted at the time when the personal user uses the popular traffic means which is the internal-combustion engine vehicle or the environment-friendly vehicle based on the driving record of the personal traffic means which is the internal-combustion engine vehicle or the environment-friendly vehicle of the personal user, and the information on the charging expenses,

At this time, the second carbon emission amount calculation module 152 may be configured to calculate the carbon emission amount rendered by the personal user using the GPS data of the portable electronic device of the personal user, and the information on the driving distance included in the driving record concerning the environment-friendly vehicle.

To explain in more detail, according to the present invention, in order to prevent the driving record of the navigation installed in the personal traffic means from being counterfeited and being forged, and to raise reliability, the second carbon emission amount calculation module 152 may calculate the second carbon emission reduction amount concerning the personal user using the GPS data GD provided from the terminal equipment PD of the personal user PU, or the GPS data server (GDS).

Then, with respect to the thirteenth step S13, the second carbon emission reduction amount calculation module 153 may calculate the second carbon emission reduction amount concerning the personal user using the amount of carbon emitted at the time when the personal user uses his or her personal traffic means which is the internal-combustion engine vehicle or the environment-friendly vehicle, and the amount of carbon emitted at the time when the personal user uses the popular traffic means which is the internal-combustion engine vehicle or the environment-friendly vehicle.

Thereafter, with respect to the fourteenth step S14, the second carbon emission right calculation module 154 may calculate the carbon emission right using the value resulting from multiplying the carbon emission reduction amount concerning the personal user by the walking constant.

Also, thereafter, with respect to fifteenth step S15, the driving-distance correction module 155 may receive the information on the charging expenses paid by the payment card for the settlement of a charge service used for only the personal traffic means which is the internal-combustion engine vehicle or the environment-friendly vehicle of the personal user from the payment card server (PCS), and may correct the second carbon emission right by calculating the carbon emission reduction amount using the information on the charging expenses, the information on the charging expenses accumulated monthly or yearly.

For example, according to the present invention, the movement distance may be measured in such a manner as to trace the charging expenses through the card used for only electric charge and/or hydric charge. That is, when a card company issues a payment (credit/check) card for the service of electric charge, and thus the electric charge is performed using the corresponding card, the charging expenses are monthly or yearly accumulated in the payment card server PCS, and the accumulated electric charge expenses are converted into the distance covered in such a manner as to count backward so that the second carbon emission reduction amount is calculated, and accordingly, it is possible to correct the second carbon emission right.

As previously described, the specific exemplary embodiments have been described in the detailed description of the present invention. However, various modifications can be made without deviating from the scope of the present invention. The technical idea of the present invention shouldn't be regarded as being limited to the aforesaid exemplary embodiments, but should be fixed based on the claims and their equivalents.

## Claims

1. A personal carbon emission right certification trade system, comprising:

   a popular traffic-based carbon emission right calculation part configured to calculate a first carbon emission reduction amount rendered by a personal user using an amount of carbon emitted at the time when the personal user uses his or her personal traffic means which is an internal-combustion engine vehicle or an environment-friendly vehicle of the personal user, and an amount of carbon emitted at the time when the personal user uses a popular traffic means which is an internal-combustion engine vehicle or an environment-friendly vehicle, and to calculate a first carbon emission right to which the first carbon emission reduction amount is applied;
an environment-friendly vehicle-based carbon emission right calculation part configured to calculate a second carbon emission reduction amount rendered by the personal user using an amount of carbon emitted at the time when the personal user uses his or her personal traffic means which is an internal-combustion engine vehicle or an environment-friendly vehicle of the personal user, and an amount of carbon emitted at the time when the personal user uses a popular traffic means which is an internal-combustion engine vehicle or an environment-friendly vehicle, and to calculate a second carbon emission right to which the second carbon emission reduction amount is applied; and
a carbon emission right trade part configured to transfer the carbon emission rights including the first carbon emission right and the second carbon emission right to a different user in response to a request for transfer of the carbon emission rights.

2. The system of claim 1, wherein the popular traffic-based carbon emission right calculation part comprises:

a first movement distance calculation module configured to calculate a first walking distance which is a distance between a departure point and a boarding station, and a second walking distance which is a distance between an alighting station and an arrival point with respect to the personal user, to calculate a first period of walking time which is time between the time when the personal user locates at the departure point, and the time when the personal user locates at the boarding station, and a second period of walking time which is a time between the time when the personal user locates at the alighting station, and the time when the personal locates at the arrival point, and to obtain a distance used by popular traffic;
a congestion level calculation module configured to calculate a first congestion level, or a second congestion level;
a first carbon emission amount calculation module configured to calculate the amount of carbon emitted at the time when the personal user uses his or her personal traffic means, and the amount of carbon emitted at the time when the personal user uses the popular traffic means using the first congestion level and the second congestion level;
a first carbon emission reduction amount calculation module configured to calculate a carbon emission reduction amount based on a difference between the amount of carbon emitted at the time when the personal user uses his or her personal traffic means, and the amount of carbon emitted at the time when the personal user uses the popular traffic means; and
a first carbon emission right calculation module configured to calculate the carbon emission right using a value resulting from multiplying the carbon emission reduction amount concerning the personal user by a walking constant.

3. The system of claim 2, wherein the first movement distance calculation module calculates:

a first walking distance by adding up movement distances shown between each of adjacent times between the time when the personal user locates at the departure point, and the time when the personal user locates at the boarding station based on GPS data of a portable electronic device of the personal user; and
a second walking distance by adding up movement distances shown between each of adjacent times between the time when the personal user locates at the alighting station, and the time when the personal user locates at the arrival point based on the GPS data of the portable electronic device of the personal user, and
the first movement distance calculation module also obtains the distance used by popular traffic from information on the distance used by popular traffic included in popular traffic use-based data concerning the personal user, and calculates a movement distance shown between the departure point and the arrival point by adding up the first walking distance, the second walking distance, and the distance used by popular traffic.

4. The system of claim 2 or 3, wherein the congestion level calculation module calculates average travel time shown between the boarding station and the alighting station based on the entire popular traffic use-based data, and calculates personal travel time shown between the boarding station and the alighting station based on the popular traffic use-based data concerning the personal user, and then
the congestion level calculation module also calculates the first congestion level by subtracting the personal travel time from the average travel time, and calculates the second congestion level by dividing the distance used by popular traffic by the personal travel time.

5. The system of claim 4, wherein the first carbon emission amount calculation module calculates the carbon emission amount shown at the time when the personal user uses his or her personal traffic means based on Mathematical

Formula 1 below:

[Mathematical Formula 1]

$$ECEV = ((CV \times EM \times EC \times V1) + (CV \times AFU1 \times CTOE \times CCE \times 44/12 \times V2)$$

(where, ECEV represents the carbon emission amount shown at the time when the personal user uses his or her personal traffic means, CV represents a congestion level, EM represents the unit (CO2/kwh) of a greenhouse gas emission source, EC represents an amount charged of electricity (kwh), Vi represents a kind of the environment-friendly vehicle(V1 represents 1, and V2 represents 0 in the case of an electric car or a hydric car, V1 represents 1, and V2 represents 1 in the case of a hybrid vehicle, and V1 represents O, and V2 represents 1 in the case of an internal-combustion engine vehicle), AUF1 represents an amount used of fuel shown at the time when the personal user uses his or her personal vehicle, CTOE represents an oil conversion factor to calculate an oil conversion amount based on the amount used of fuel shown at the time when the personal user uses his or her personal vehicle, and CCE represents a carbon emission factor to calculate the carbon emission amount based on the oil conversion amount shown at the time when the personal user uses his or her personal vehicle), and

the first carbon emission amount calculation module also calculates the carbon emission amount shown at the time when the personal user uses the popular traffic means based on Mathematical Formula 2 below:

[Mathematical Formula 2]

$$EPCEV = ((CV \times EM \times EC \times V1) + (CV \times AFU2 \times CTOE \times CCE \times 44/12 \times V2)) \times 1/NP$$

(ECEV represents the carbon emission amount shown at the time when the personal user uses the popular traffic means, CV represents the congestion level, EM represents the unit (CO2/kwh) of a greenhouse gas emission source, EC represents an amount charged of electricity (kwh), Vi represents a kind of the environment-friendly vehicle(V1 represents 1, and V2 represents 0 in the case of an electric car or a hydric car, V1 represents 1, and V2 represents 1 in the case of a hybrid vehicle, and V1 represents O, and V2 represents 1 in the case of an internal-combustion engine vehicle), AUF2 represents an amount used of fuel shown at the time when the personal user uses the popular traffic means, CTOE represents an oil conversion factor to calculate an oil conversion amount based on the amount used of fuel shown at the time when the personal user uses the popular traffic means, CCE represents a carbon emission factor to calculate the carbon emission amount based on the oil conversion amount shown at the time when the personal user uses the popular traffic means, and NP represents the average number of re-boarding persons which is an average value concerning the number of persons who get on the popular traffic means).

6. The system of claim 5, wherein the first carbon emission right calculation module calculates the walking constant based on Mathematical Formula 3 below:

[Mathematical Formula 3]

$$\sigma = 1 + \frac{WD1 + WD2}{WD1 + WD2 + TDD}$$

(σ represents the walking constant, WD1 represents the first walking distance, WD2 represents the second walking distance, and TDD represents the distance used by popular traffic), and

the first carbon emission right calculation module also calculates the carbon emission right owned by the personal user based on Mathematical Formula 4 below:

[Mathematical Formula 4]

$$CER = (ECEV - EPCEV) \times \sigma$$

(CER represents the carbon emission right owned by the personal user, ECEV represents the carbon emission amount shown at the time when the personal user uses his or her personal traffic means, EPCEV represents the carbon emission amount shown at the time when the personal user uses the popular traffic means, and σ represents the walking constant).

7.  The system of claim 6, wherein the environment-friendly vehicle-based carbon emission right calculation part further comprises:

    a second movement distance calculation module configured to calculate a first walking distance which is a distance between a departure point and a boarding station, and a second walking distance which is a distance between an alighting station and an arrival point with respect to the personal user, to calculate a first period of walking time which is time between the time when the personal user locates at the departure point, and the time when the personal user locates at the boarding station, and a second period of walking time which is time between the time when the personal user locates at the alighting station, and the time when the personal locates at the arrival point, to obtain a distance used by a popular traffic means which is an internal-combustion engine vehicle or an environment-friendly vehicle, and to calculate a distance covered by the personal traffic means using a driving record including information on a distance covered by a personal traffic means which is an internal-combustion engine vehicle or an environment-friendly vehicle of the personal user;
    a second carbon emission amount calculation module configured to calculate an amount of carbon emitted at the time when the personal user uses an environment-friendly vehicle, and an amount of carbon emitted at the time when the personal user uses a popular traffic means which is an internal-combustion engine vehicle or an environment-friendly vehicle using a driving record of the personal traffic means which is the internal-combustion engine vehicle or the environment-friendly vehicle of the personal user, and information on charging expenses;
    a second carbon emission reduction amount calculation module configured to calculate a second carbon emission reduction amount rendered by the personal user using the amount of carbon emitted at the time when the personal user uses his or her personal traffic means which is the internal-combustion engine vehicle or the environment-friendly vehicle, and the amount of carbon emitted at the time when the personal user uses the popular traffic means which is the internal-combustion engine vehicle or the environment-friendly vehicle;
    a second carbon emission right calculation module configured to calculate a second carbon emission right using a value resulting from multiplying the carbon emission reduction amount concerning the personal user by a walking constant; and
    a driving-distance correction module configured to receive the information on the charging expenses paid by a payment card for the settlement of a charging service concerning the personal traffic means which is the internal-combustion engine vehicle or the environment-friendly vehicle of the personal user from a payment card server, and to correct the second carbon emission right using the information on the charging expenses accumulated monthly or yearly with respect to the charging expenses.

8.  The system of claim 7, wherein the second carbon emission amount calculation module calculates the carbon emission amount shown at the time when the personal user uses his or her personal traffic means which is the internal-combustion engine vehicle or the environment-friendly vehicle based on said Mathematical Formula 1.

9.  The system of claim 8, wherein the second carbon emission amount calculation module calculates the carbon emission amount shown at the time when the personal user uses the popular traffic means which is the internal-combustion engine vehicle or the environment-friendly vehicle based on said Mathematical Formula 2.

10. The system of any one of claims 7 to 9, wherein the second carbon emission amount calculation module calculates the carbon emission amount concerning the personal user using the GPS data of the portable electric device of the personal user, and information on a driving distance included in the driving record of the environment-friendly vehicle.

11. The system of any one of claims 7 to 10, wherein the second carbon emission right calculation module calculates the walking constant based on said Mathematical Formula 3, and calculates the carbon emission right owned by the personal user based on said Mathematical Formula 4.

12. The system of any one of the preceding claims, further comprising a communication module configured to receive the popular traffic use-based data, and the GPS of the portable electric device, and a request for transfer of the carbon emission rights, to receive the information on the charging expenses paid by the payment card from the payment card server, and to receive the driving record including the information on the distance covered by the personal traffic means which is the internal-combustion engine vehicle or the environment-friendly vehicle of the personal user.

13. The system of claim 12, further comprising a storage module configured to store the popular traffic use-based data concerning the personal user, the GPS data of the portable electric device of the personal user, and information on the first carbon emission reduction amount concerning the personal user, and information on the first carbon emission right owned by the personal user, and to store the driving record including the information on the distance covered by the personal traffic means which is the internal-combustion engine vehicle or the environment-friendly vehicle of the personal user, the information on the distance covered by the personal traffic means which is calculated, and information on the second carbon emission reduction amount concerning the personal user, the information on the charging expenses paid by the payment card provided from the payment card server, and information on verifying and correcting the driving distance included in the driving record.

14. The system of claim 13, further comprising a user interface module which is configured to cause the storage module to load the popular traffic use-based data concerning the personal user, the GPS data of the portable electronic device of the personal user, the information on the first carbon emission reduction amount, and the information on the first carbon emission right according to a request for the provision of information provided from terminal equipment of the personal user, and to transmit them to the terminal equipment of the personal user through the communication module, and

Which is configured to cause the storage module to load the driving record including the information on the distance covered by the personal traffic means which is the internal-combustion engine vehicle or the environment-friendly vehicle of the personal user, the information on the distance covered by the personal traffic means which is calculated, and the information on the second carbon emission reduction amount concerning the personal user, the information on the charging expenses paid by the payment card provided from the payment card server, and information on verifying and correcting the driving distance included in the driving record, and to transmit them to the terminal equipment of the personal user through the communication module.

FIG. 1

FIG. 2

FIG. 3

150

| Second movement distance calculation module | ~151 |

| Second carbon emission amount calculation module | ~152 |

| Second carbon emission reduction amount calculation module | ~153 |

| Second carbon emission right calculation module | ~154 |

| Driving-distance correction module | ~155 |

Environment-Friendly vehicle-based carbon emission
right calculation part

FIG. 4

| Item | Data #1 | Data #2 | ··· |
|---|---|---|---|
| Personal User Identifier (TD-11) | ID10000001 | ID10000002 | ··· |
| Popular Traffic Means (TD-12) | Subway | Bus | ··· |
| Line Number (TD-13) | 5 | 200 | ··· |
| Vehicle Number (TD-14) | 25571387 | 68363158 | ··· |
| Boarding Time (TD-15) | 20200928074144 | 20200928143253 | ··· |
| Alighting Time (TD-16) | 20200928083052 | 20200928150311 | ··· |
| Boarding Station (TD-17) | 1952 | 4111614 | ··· |
| Alighting Station (TD-18) | 2010 | 41966173 | ··· |
| Popular Traffic Movement Distance (TD-19) | 11500 | 5767 | ··· |

FIG. 5

| Personal user identifier (GD-11) | Data (GD-12) | Time (GD-13) | Longitude (GD-14) | Latitude (GD-15) |
|---|---|---|---|---|
| ID10000001 | 20200928 | 11:33:14 | 157371.1365 | 541431.3330 |
| ID10000001 | 20200928 | 11:33:15 | 157371.1370 | 541431.3335 |
| ID10000001 | 20200928 | 11:33:16 | 157371.1375 | 541431.3340 |
| ID10000001 | 20200928 | 11:33:17 | 157371.1380 | 541431.3345 |
| ⋮ | ⋮ | ⋮ | ⋮ | ⋮ |

FIG. 6

FIG. 7

| Station | $BS_1$ | $BS_2$ | $BS_3$ | $BS_4$ | ⋯ | $BS_{N-1}$ | $BS_N$ |
|---|---|---|---|---|---|---|---|
| Number of Boarding Persons | 10 | 3 | 16 | 6 | ⋯ | 5 | 0 |
| Number of Alighting Persons | 0 | 1 | 9 | 5 | ⋯ | 8 | 3 |
| Number of Re-boarding Persons | 10 | 12 | 19 | 20 | ⋯ | 3 | 0 |

FIG. 8

| Recording Order | Latitude | Longitude | Time | Accumulated Distance (km) |
|---|---|---|---|---|
| 1 | 36.153 | 125.684 | 12:56:01 | 0.00 |
| 2 | 36.611 | 125.126 | 12:56:06 | 0.15 |
| 3 | 36.694 | 125.364 | 12:56:18 | 0.26 |
| 4 | 36.139 | 125.951 | 12:56:25 | 0.35 |
| ⋮ | ⋮ | ⋮ | ⋮ | ⋮ |
| 25 | 37.268 | 126.351 | 01:15:24 | 15.69 |

FIG. 9

| Recording Order | Link ID | Approach Time | Advance Time |
|---|---|---|---|
| 1 | 39142 | 04:25:39 | 04:25:42 |
| 2 | 39915 | 04:25:46 | 04:25:58 |
| 3 | 35194 | 04:26:01 | 04:26:09 |
| 4 | 35199 | 04:26:10 | 04:26:19 |
| ⋮ | ⋮ | ⋮ | ⋮ |
| 45 | 31139 | 04:39:57 | 04:40:09 |

FIG. 10

Start

Calculating a movement distance — S1

Calculating a first congestion level or a second congestion level — S2

Calculating a carbon emission amount — S3

Calculating a carbon emission reduction amount — S4

Renewing a right to emit carbon — S5

END

FIG. 11

```
                    ( Start )
                        |
                        v
  Calculating a movement distance and a driving distance  ~S11
                        |
                        v
  Calculating a second carbon emission amount             ~S12
                        |
                        v
  Calculating a second carbon emission reduction amount   ~S13
                        |
                        v
  Calculating a second right to emit carbon               ~S14
                        |
                        v
  Correcting the second carbon emission right             ~S15
                        |
                        v
                     ( END )
```

Europäisches
Patentamt
European
Patent Office
Office européen
des brevets

# EUROPEAN SEARCH REPORT

Application Number

EP 23 17 0075

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 102 202 420 B1 (KIM IL HWAN [KR]; KIM JUNG IN [KR]; MOON JI YONG [KR]) 12 January 2021 (2021-01-12) * the whole document * | 1-14 | INV. G06Q30/06 |
| A | RAUX CHARLES ET AL: "Would personal carbon trading reduce travel emissions more effectively than a carbon tax?", TRANSPORTATION RESEARCH PART D: TRANSPORT AND ENVIRONMENT, vol. 35, 1 March 2015 (2015-03-01), pages 72-83, XP029138619, ISSN: 1361-9209, DOI: 10.1016/J.TRD.2014.11.008 * the whole document * | 1-14 | |

TECHNICAL FIELDS
SEARCHED      (IPC)

G06Q

The present search report has been drawn up for all claims

| Place of search | Date of completion of the search | Examiner |
|---|---|---|
| Munich | 31 August 2023 | Weidmann, Matthias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 17 0075

This annex lists the patent family members relating to the patent documents cited in the above-mentioned European search report.
The members are as contained in the European Patent Office EDP file on
The European Patent Office is in no way liable for these particulars which are merely given for the purpose of information.

31-08-2023

| Patent document cited in search report | Publication date | Patent family member(s) | Publication date |
|---|---|---|---|
| KR 102202420 B1 | 12-01-2021 | NONE | |

EPO FORM P0459

**EP 4 270 293 A1**

## REFERENCES CITED IN THE DESCRIPTION

**Patent documents cited in the description**

- KR 1020220052499